# EUROPEAN PATENT SPECIFICATION

(11) **EP 3 066 964 B1**
(45) Date of publication and mention of the grant of the patent: **08.05.2019**
(21) Application number: 16155051.2
(22) Date of filing: 10.02.2016
(51) Int. Cl.: A47J 31/44

(54) **MILK DISPENSING APPARATUS**
VORRICHTUNG ZUM ZUBEREITEN VON MILCH
DISPOSITIF POUR DISTRIBUER DU LAIT

(30) Priority: 12.03.2015 IT MI20150379
(43) Date of publication of application: 14.09.2016
(73) Proprietor: Gruppo Cimbali S.p.A., 20082 Binasco (MI) (IT)
(72) Inventor: QUARATESI, Guido, 20082 Binasco MI (IT)
(74) Representative: Perani & Partners S.p.A.

(56) References cited:
- EP-A1- 2 055 215
- WO-A1-97/47376
- US-A1- 2009 095 163

## Description

The present invention concerns an apparatus for preparing and dispensing cold and hot, frothed and non-frothed milk.

Automatic machines have been developed in the art for preparing frothed and non-frothed milk, and for preparing hot beverages with or without coffee, such as "latte" and cappuccino. In such machines milk may be heated by introducing steam into the liquid within a container by means of a submerged wand or by routing the liquid through a flow-through heater within the hydraulic circuit.

Patent application EP 1 785 074 A1 discloses an automatic apparatus for heating milk by means of steam and for producing heated and frothed milk, which comprises a mixing chamber which receives a milk flow at a predetermined flow rate and a steam flow at a predetermined flow rate from respective separate ducts. A variable-speed peristaltic pump is provided in the milk duct, and the mixing chamber is connected downstream to a milk-frothing device, which receives air, milk and steam. Pump speed variation will change the flow rate of milk and the milk-steam flow rate ratio. This will provide a temperature-controlled final product.

A system for preparing hot frothed milk using a steam heater, milk feeding and a separate steam feeding, is disclosed in WO 2013/064232 and US 2009/095163.

Patent application US 2011/014329 discloses a milk frothing device which comprises a milk feeding line, a steam feeding line and an air feeding line, which are connected to a frothing chamber. The average air flow may be controlled by repeatedly switching between a high air flow state and a low air flow state.

Cold frothed milk-based beverages have recently gained interest. Patent application US 2010/0075007 discloses a method of producing cold or hot milk foam, in which a milk-air mixture is sucked in by means of a pump and selectively conveyed via a throttle point, directly or via a flowthrough heater.

Patent application EP 0 485 350 A1 discloses a device for homogenizing, mixing and emulsifying products such as cream, coffee and milk, e.g. for whipping cream or creating hot or cold milk and/or coffee creams. In such device, a pump has the purpose of sucking in the liquid product to be treated and applying some mechanical energy thereto. The delivery side of the pump is connected to an outlet line having means for slowing the flow rate of the air and product mixture such that a strong mechanical whipping action is exerted on the mixture within the pump and, as the mixture passes through the line, it assumes a creamy aspect on exiting therefrom. One embodiment of EP 0 485 350 A1 describes a device having a resistor external to the outlet line for heating the fluid as it flows, and a longitudinal bar is provided within the line, which is indicated as having both purposes of reducing the inside diameter of the line and of ensuring constant cleaning of the line by means of its vibrations.

The Applicant observed that, in a device such as the one as disclosed in EP 0 485 350 A1, the reduction of the inside diameter of the outlet line caused by a longitudinal bar may add complexity to the line cleaning operations because the bar, which is secured to an outlet line section, is first partially pulled out and used as a cleaning tool and then completely pulled out to complete the cleaning process.

The Applicant observed that the length and cross section of the outlet line which extends from the delivery side of the pump to the dispensing outlet are advantageously selected to ensure dispensing of high-quality milk foam from the dispensing outlet, both when hot frothed milk and cold frothed milk is being dispensed. Particularly, the flow cross section of the line that is directly connected to the delivery side of the pump, the milk/air flow pushed by the pump passing through the cross-section, and the length of such line must be designed to ensure satisfactory consistency and quality of the cold milk foam before the latter is possibly heated within a flow-through heater.

As used herein, the term flow cross section of a line is intended as the section designed for the flow of fluid, i.e. the milk-air mixture.

The Applicant has realized that it would be advantageous to select an outlet line, connected to the delivery side of the pump, that has an inside cross section of 1 mm or less. The Applicant has noted that, using a line with a smaller cross section up to the dispensing outlet, in case of calibration and/or programming of the milk temperature with the variation of operating parameters such as the rotation speed of a variable rate pump, the temperature control system might be less sensitive to the variation of such parameter and hence more difficultly controlled.

Furthermore, in certain practical cases, a smaller cross section along the outlet line extending from the delivery side of the pump to the dispensing outlet, and particularly from the heater to the outlet, might cause relatively large pressure drops in the fluid that flows through the line and the pressure in the flow-through heater might increase.

The Applicant has realized that, in an apparatus for dispensing cold/hot frothed milk that provided with an outlet line with a flow-through heating device therein, good-quality cold and hot milk foam may be obtained by selecting a longitudinal line section upstream from the heater device, that has flow cross section and length suitable for the creation of cold milk foam, and a longitudinal line section downstream from the heating device that has a larger flow cross section. Advantageously, the temperature of the heated milk can be accurately controlled.

The present disclosure provides an apparatus for dispensing cold frothed milk and hot frothed or non-frothed milk, which comprises:
- a milk suction line hydraulically connected to a milk container and an air line for allowing air into the suction line;
- a pump having an inlet side and a delivery side, the pump being driven by a motor, with the inlet side being hydraulically connected to a suction line to suck in milk and air;
- an outlet line which leads to a dispensing outlet and which comprises a first longitudinal line section and a second longitudinal line section located downstream from the first longitudinal section toward the delivery outlet, wherein the first longitudinal line section has a first end connected to the delivery side of the pump and a second end, opposite to the first end, and the second longitudinal line section has a first end, proximal to the first longitudinal line section and a second end, distal from the first longitudinal line section, and corresponding to the dispensing outlet;
- a flow-through heating device having a first flow inlet with the fluid pushed by the pump flowing therethrough, and a flow outlet, wherein the first flow inlet is connected to the second end of the first longitudinal line section and the flow outlet is connected to the first end of the second longitudinal line section,
wherein the first longitudinal line section has a flow cross section with a first diameter of from 0.70 mm to 1.00 mm and a first length of from 50 mm to 500 mm and the second longitudinal line section has a flow cross section with a second diameter, which is greater than the first diameter.

Preferably, the first diameter of from 0.75 mm to 0.95 mm and the first length of from 100 mm to 400 mm.

According to the invention, the second diameter is of from 2.00 mm to 3.00 mm, preferably of from 2.25 mm to 2.75 mm.

In certain embodiments, the second longitudinal line section has a second length ranging from 200 mm to 600 mm.

In some embodiments, the flow-through heating device further comprises a second flow inlet connected to a steam generator via a steam line for supplying steam into the heating device wherein an on/off steam valve is disposed in the steam line, and has a closed position and an open position for disabling and enabling steam supply into the heating device respectively.

In some embodiments, the pump is a variable speed pump, wherein the motor of the pump is controlled by a driver electronically connected to an electronic control unit, which is configured to regulate the flow from the pump by adjusting the rotational speed of the pump. Preferably, the on/off steam valve is a solenoid valve, which is electronically controlled by the control unit, and the electronic control unit is configured to set a hot frothed milk dispensing operation by enabling steam delivery into the heating device and to select a temperature of the dispensed milk, by setting the rotational speed of the pump.

Preferably, the steam flow that enters the heating device has a predetermined flow rate value. Thus, temperature control is obtained by regulating the flow rate of the pump.

In certain embodiments, the electronic control unit is configured to set a cold frothed milk dispensing operation by disabling steam delivery into the heating device and to select a rotational speed of the pump.

As used herein and in general terms, "cold" milk is intended as unheated milk. Preferably, cold milk is refrigerated milk, preferably having a temperature from 3°C to 7°C. For example, milk is sucked in from a refrigerated container.

In one embodiment, steam is introduced through a steam line, which is oriented transverse to the outlet line and opens into the outlet line through an inlet of the flow-through heater, and an electronic steam introduction control enables or disables steam supply into the outlet line. Preferably, the steam line is transverse to the first longitudinal line section.

As used herein, a direction "transverse" to the flow direction, and a first line "arranged transverse" to a second line are intended such that the two directions (or the two lines) intersect to form a non-zero angle, preferably not smaller than 20°. In a preferred embodiment, the steam introduction direction is perpendicular to the direction of the milk/air mixture flowing into the outlet line.

The present invention will be now described in greater detail with reference to the annexed drawing, which shows one embodiment, and shall be intended as a schematic not-to-scale representation.

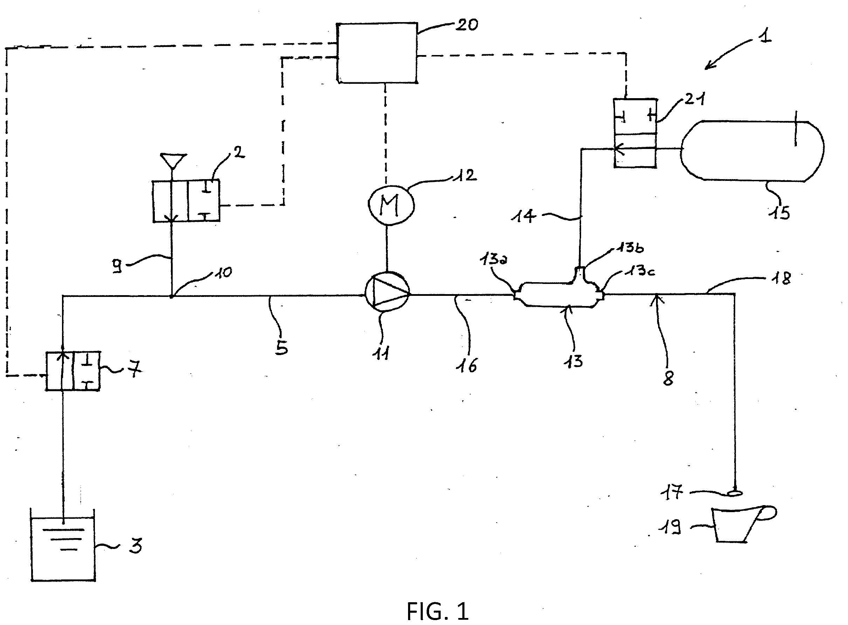

FIG. 1 schematically shows an apparatus for dispensing hot and cold, frothed and non-frothed milk according to one embodiment.,
Figure 1 shows the diagram of an apparatus 1 for preparing and dispensing either cold or hot milk-based beverages, either with or without frothing. In some embodiments, the apparatus for dispensing cold or hot milk is part of a coffee machine, preferably an espresso coffee machine, which dispenses various coffee-, milk and coffee- or only milk-based beverages, such as cappuccino, "latte macchiato", "caffè estivo" with cold frothed milk, hot non-frothed milk, etc.

Cold milk, preferably refrigerated at a temperature from 3°C to 5°C, is contained in a milk container. For example, the milk container 3 is housed in a refrigeration unit (not shown). The cold milk is sucked in from the container along a suction line 5 having a first end inserted in the container 3 and a second end hydraulically connected to a pump 11. The pump 11 is driven by a motor 12 and is preferably a gear pump. As is known in the art, the motor 12 is controlled by an electronic driver (referenced 12 in the figure), which is in turn controlled by an electronic control unit (e.g. a CPU) 20. Thus, the pump may be turned on and off by electronic control.

An on/off milk valve 7 may be placed on the suction line 5 for closing and opening the milk inlet and hence stopping the milk flow or establishing a hydraulic connection between the container and the suction line 5 respectively. During a dispensing operation, the on/off valve 7 is in the open position, to enable milk suction by means of the pump 11.

In the embodiment of Figure 1, the end of the suction line 5 opposite to the end submerged in the container 3 is directly connected to the inlet side of the pump 11.

Upstream from the pump 11, an air line 9 is connected to the suction line 5 at a connection point 10. The air line 9 has a free end for the intake of ambient air, a flow calibrator (not shown) being possibly placed on such intake end, for regulating the incoming air flow, and hence the amount of air introduced during beverage dispensing. Preferably, the apparatus comprises an on/off air valve 2 for opening and closing the air line 9, which is preferably a solenoid valve controlled by the electronic control unit 20.

When the the on/off air valve 2 is in its open position for dispensing frothed milk, milk is sucked in by the pump 11 from the container 3 and combines with air in the suction line, and the milk-air mixture is treated within the pump 11 and output from the pump outlet into an outlet line 8. During dispensing of non-frothed milk, the on/off air valve 2 is in the closed position and the pump 11 sucks in milk from the container along the suction line 5, and pushes it into the outlet line 8.

For frothed milk dispensing, the compressed milk-air mixture is pushed by the pump 11 along the outlet line 8 to a flow-through heating device 13 arranged in the outlet line and configured to heat milk as it flows within the heating device. The outlet line 8 ends with a dispensing outlet 17.

The outlet line 8 comprises a first longitudinal line section 16 and a second longitudinal line section 18 located downstream from the first longitudinal section 16 toward the dispensing outlet 17. The flow-through heating device is interposed between the first longitudinal line section 16 and the second longitudinal line section 18.

The flow-through heating device 13 comprises a first flow inlet 13a for receiving the milk or milk-air mixture pushed by the delivery side of the pump 11. The flow-through heating device 13 is connected to a steam generator 15 via a steam line 14. The steam line 14 introduces pressurized steam into the flow-through heating device 13 through a second flow inlet 13b of the heating device, which is in such a position, relative to the first flow inlet 13a, that the milk (or milk-air mixture) and the steam are separately supplied in two directions that intersect within the heating device.

In an embodiment, the steam line 14 is transverse to the first longitudinal line section 16.

An on/off steam valve 21 is arranged in the steam line 14, for closing and opening said line and hence stopping the steam flow or routing it to the heating device 13. The valve 21 is a solenoid valve controlled by the control unit 20. For cold milk dispensing, the on/off valve 21 is in the closed position and the milk-air mixture or the milk flows through the heating device without being heated. If hot milk is to be dispensed, the on/off steam valve 21 is in the open position and the milk is heated by the steam introduced into the second inlet 13b. Preferably, the on/off solenoid valve 21 is a normally closed valve, which means that the closed position is its rest position. The electronic control unit 20, which is connected to the solenoid valve 21 via a control line, actuates the solenoid valve to the open and closed positions.

In these embodiments, steam introduction is electronically controlled by controlling the opening of the on/off steam valve for hot milk dispensing, and by controlling that the on/off steam valve is in the closed position for cold milk dispensing.

The flow-through heating device 13 comprises an inner tubular chamber along which the milk/air mixture flows and is mixed with steam if the on/off valve 21 is in the open position. The milk-air mixture for cold frothed milk dispensing, or the milk-air and steam mixture for hot frothed milk dispensing, flows out of a flow outlet 13c of the heating device, which is located downstream from both inlets 13a and 13b of the heating device, such that the milk/air mixture enters the flow inlet 13a of the heating device 13 and, if the on/off valve 21 is open, exits the flow inlet 13c of the heating device in a heated state.

In the embodiment of Figure 1, the flow outlet 13c is located on the side of the heater that faces away from the first inlet 13a of the heating device in the direction of the first longitudinal line section 16. An exemplary flow-through heater that is suitable for use in the apparatus of the present disclosure is disclosed in EP 1 977 668 A1.

In some embodiments, the pump 11 has a variable flow rate. Preferably the pump 11 is a variable speed pump and the driver of the motor 12 that drives the pump is controlled by the control unit 20 such that the control unit controls the rotation speed of the pump. A variation in the speed of the pump will change the flow rate of the milk-air mixture that flows out of the pump and, when hot frothed milk is dispensed, the ratio between milk-air mixture and steam flow rates to thereby control the temperature of the final product being dispensed. The outflowing hot frothed milk may be required to have different temperatures according to the selected beverage, e.g. "latte macchiato", "cappuccino" or "caffè macchiato".

Preferably, the steam flow has a constant rate, which means that a predetermined flow rate value is selected for the steam flow, and the temperature of hot frothed milk is controlled by regulating the rotation speed of the pump using the electronic control unit 20. In one embodiment, the speed of the pump ranges from 2000 rpm (revolutions per minute) to 4000 rpm, which corresponds to a temperature range from 50°C to 75°C, the higher temperature corresponding to the lower rpm. In one embodiment, the speed of the pump is set to 4000 rpm to obtain outflowing frothed milk at about 50°C and is set to 2000 rpm to obtain outflowing frothed milk at about 75°C.

In ways per se known, once a milk-based beverage has been selected for dispensing, the control unit 20 carries out a dispensing operation by enabling or disabling the on/off steam valve (depending on whether hot or cold milk has been requested) and selecting the pump speed. For hot milk dispensing, with constant steam flow being introduced into the outlet line 8, the temperature of the milk being dispensed is given by the rotation speed selected for the pump. Preferably, the control unit selects additional parameters for dispensing, such as the dispensing time.

According to the present disclosure, the flow cross section and the length of the first longitudinal line section 16 are selected such that a cold milk foam of satisfactory quality may be obtained before milk enters the heating device 13. The first longitudinal line section 16 is directly connected to the delivery side of the pump 11 at a first end thereof, and to the first inlet 13a of the flow-through heating device 13 at a second end thereof, opposite to the first end.

The first longitudinal line section 16 has a flow-through cross section with a first diameter, which is also referred to as first inside diameter, ranging from 0.70 mm to 1.00 mm.

The flow outlet 13c of the heating device is connected to a first end of the second longitudinal line section 18, whereas the second end thereof, opposite to the first end, corresponds to the dispensing outlet 17. The dispensing outlet may be configured as a spout or a nozzle. In certain embodiments, the dispensing outlet 17 is part of a dispensing unit (not shown), which is mounted to the end portion of the second longitudinal line section 18.

The second longitudinal line section 18, connected to the outlet 13c of the heating device 13, has a flow-through cross section with a second diameter (i.e. the second inside diameter) that is greater than the first diameter. The second diameter ranges from 2.00 mm to 3.00 mm, preferably from 2.25 mm to 2.75 mm. The second longitudinal line section 18 has a second length that preferably ranges from 200 mm to 600 mm, more preferably from 300 mm to 500 mm. For example, the second diameter is 2.5 mm and the second length is 400 mm.

The second longitudinal line section is made, for instance, of a polymeric material or stainless steel.

The greater the length of the outlet line the more the flow rate of the fluid therethrough is slowed down. The Applicant has found that the lengths of the first and second longitudinal line sections 16, 18 are advantageously selected considering the flow rate of the milk-air mixture in the outlet line sections and hence the rotation speed of the pump, such that the hot frothed milk may be dispensed at one or more desired temperatures. Furthermore, once a flow cross section has been selected, the length of the first line section is selected to obtain a cold milk or hot milk foam of high consistency and quality.

The first longitudinal line section has a first length ranging from 50 mm to 500 mm. Preferably, the first length of the first longitudinal line section is selected according to the diameter of the flow cross section. A flow cross section diameter of 1 mm will preferably correspond to a length of 500 mm.

Preferably, the first diameter of the first longitudinal line section 16 ranges from 0.75 mm to 0.95 mm and the first length ranges from 100 mm to 400 mm. In a particularly preferred embodiment, the first flow cross section diameter is 0.84 mm and the first length is 125 mm. The first longitudinal line section is made, for instance, of a polymeric material or stainless steel.

In some embodiments, the outside diameter of the first longitudinal line section and the outside diameter of the second longitudinal line section are identical. In one embodiment, the outside diameter of the longitudinal line sections is 4 mm.

For cold frothed milk dispensing, the rotation speed of the pump is selected to obtain a high-quality foam. Preferably, for cold frothed milk dispensing, the rotation speed of the pump is set to a value ranging from 3000 rpm to 4000 rpm. In a particularly preferred embodiment, the rotation speed for cold frothed milk dispensing is 3500 rpm.

In one embodiment, the flow rate of ambient air entering the air line 9 is adjusted according to the type of dispensing operation, i.e. cold frothed milk or hot frothed milk. In one embodiment, the valve 2 on the air line is a proportional solenoid valve controlled by the unit control, which is configured to set a first air flow rate value for cold milk dispensing and a second air flow rate value for hot milk dispensing. In a different embodiment (not shown), the apparatus comprises two air lines, each of which may be equipped with a respective on/off valve controlled by the control unit. In this embodiment, the flow rate of air entering the respective air lines, i.e. the amount of air introduced during beverage dispensing, is set to two different values, and the control unit selectively opens one of the two on/off valves, upon selection of the beverage type.

In per se known ways, in an automatic beverage dispensing unit, the dispensing operation takes a dispensing time, in which the beverage is dispensed into a collection container, e.g. a cup 19. At the end of the dispensing time, the on/off milk valve 7 is closed and/or the pump 11 is stopped to ensure that the amount of milk that has been dispensed is the desired amount or, as is often the case in automatic machines, is the amount that has been set in the control unit 20 for the dispensing operation carried out according to a preset program.

Preferably the on/off valves for milk, air and steam 7, 2 and 21 are solenoid valves designed to be electronically controlled by an electronic control unit (CPU) 20. In the annexed figure, the control lines that connect the CPU to the on/off valves and the electronic pump driver respectively are shown as broken lines.

## Claims

1. An apparatus for dispensing frothed or non-frothed cold and hot milk, which comprises:
- a milk suction line (5) hydraulically connected to a milk container (3) and an air line (9) for allowing air into the suction line (5);
- a pump (11) having an inlet side and a delivery side, the pump being driven by a motor (12), with the inlet side being hydraulically connected to a suction line (8) to suck in milk and air;
- an outlet line (8) which leads to a dispensing outlet (17) and which comprises a first longitudinal line section (16) and a second longitudinal line section (18) located downstream from the first longitudinal section (16) toward the delivery outlet (17), wherein the first longitudinal line section has a first end connected to the delivery side of the pump (11) and a second end, opposite to the first end, and the second longitudinal line section has a first end and an opposite second end corresponding to the dispensing outlet (17);
- a flow-through heating device (13) having a first flow inlet (13a) with the fluid pushed by the pump flowing therethrough, and a flow outlet (13c), wherein the first flow inlet (13a) is connected to the second end of the first longitudinal line section (16) and the flow outlet is connected to the first end of the second longitudinal line section (18),
**characterized in that** the first longitudinal line section (16) has a flow cross section with a first diameter of from 0.70 mm to 1.00 mm and a first length of from 50 mm to 500 mm and the second longitudinal line section (18) has a flow cross section with a second diameter, which is greater than the first diameter, the second diameter being of from 2 mm to 3 mm.

2. The apparatus as claimed in claim 1, wherein the first diameter is of from 0.75 mm to 0.95 mm and the first length is of from 100 mm to 400 mm,

3. The apparatus as claimed in any of the preceding claims, wherein the second longitudinal line section (18) has a second length of from 200 mm to 600 mm.

4. The apparatus as claimed in any of the preceding claims, wherein the flow-through heating device (13) further comprises a second flow inlet (13b) connected to a steam generator (15) via a steam line (14) for supplying steam into the heating device (13) wherein steam supply is enabled when dispensing hot milk and is disabled when dispensing cold milk.

5. The apparatus as claimed in any of claims 1 to 3, wherein the flow-through heating device (13) further comprises a second flow inlet (13b) connected to a steam generator (15) via a steam line (14) for supplying steam into the heating device (13) wherein an on/off steam valve (21) is arranged in the steam line, and has a closed position and an open position for disabling and enabling steam supply into the heating device (13) respectively.

6. The apparatus as claimed in any of the preceding claims, wherein the pump (11) is a variable speed pump, with the motor (12) of the pump being controlled by a driver electronically connected to an electronic control unit (20), which is configured to regulate the flow from the pump by adjusting the rotational speed of the pump.

7. The apparatus as claimed in claim 6, when dependent on claim 5, wherein the on/off steam valve (21) is a solenoid valve, which is electronically controlled by the control unit (20), and the electronic control unit is configured to set a hot frothed milk dispensing operation by enabling steam delivery into the heating device (13) and to select a temperature of the dispensed milk, by setting the rotational speed of the pump (11).

8. The apparatus as claimed in claim 6, when dependent on claim 5, wherein the on/off steam valve (21) is a solenoid valve, which is electronically controlled by the control unit (20), and the electronic control unit is configured to set a cold frothed milk dispensing operation by disabling steam delivery into the heating device (13) and to select a rotational speed of the pump (11).

## Patentansprüche

1. Einrichtung zur Ausgabe von geschäumter oder nicht-geschäumter kalter und heißer Milch, welche Folgendes umfasst:
- eine Milchansaugleitung (5), die hydraulisch mit einem Milchbehälter (3) und einer Luftleitung (9) zum Zuführen von Luft in die Ansaugleitung (5) verbunden ist;
- eine Pumpe (11) mit einer Einlassseite und einer Zufuhrseite, wobei die Pumpe von einem Motor (12) angetrieben wird, wobei die Einlassseite hydraulisch mit einer Ansaugleitung (8) zum Einsaugen von Milch und Luft verbunden ist;
- eine Auslassleitung (8), die zu einem Ausgabeauslass (17) führt und die einen ersten länglichen Leitungsabschnitt (16) und einen zweiten länglichen Leitungsabschnitt (18) umfasst, der sich stromab von dem ersten länglichen Abschnitt (16) in Richtung des Zufuhrauslasses (17) befindet, wobei der erste längliche Leitungsabschnitt ein erstes Ende, verbunden mit der Zufuhrseite der Pumpe (11), und ein zweites Ende, gegenüberliegend zu dem ersten Ende, aufweist, und wobei der zweite längliche Leitungsabschnitt ein erstes Ende und ein gegenüberliegendes zweites Ende, entsprechend dem Ausgabeauslass (17) aufweist;
- eine Durchflusserhitzervorrichtung (13) mit einem ersten Flusseinlass (13a), wobei das durch die Pumpe gedrückte Fluid durchfließt, und einem Flussauslass (13c), wobei der erste Flusseinlass (13a) mit dem zweiten Ende des ersten länglichen Leitungsabschnitts (16) verbunden ist, und der Flussauslass mit dem ersten Ende des zweiten länglichen Leitungsabschnitts (18) verbunden ist,
**dadurch gekennzeichnet, dass** der erste längliche Leitungsabschnitt (16) einen Flussquerschnitt mit einem ersten Durchmesser von 0,70 mm bis 1,00 mm und eine erste Länge von 50 mm bis 500 mm aufweist und der zweite längliche Leitungsabschnitt (18) einen Flussquerschnitt mit einem zweiten Durchmesser aufweist, der größer ist als der erste Durchmesser, wobei der zweite Durchmesser von 2 mm bis 3 mm beträgt.

2. Einrichtung nach Anspruch 1, wobei der erste Durchmesser von 0,75 mm bis 0,95 mm beträgt und die erste Länge von 100 mm bis 400 mm beträgt,

3. Einrichtung nach einem der vorstehenden Ansprüche, wobei der zweite längliche Leitungsabschnitt (18) eine zweite Länge von 200 mm bis 600 mm aufweist.

4. Einrichtung nach einem der vorstehenden Ansprüche, wobei die Durchflusserhitzervorrichtung (13) ferner einen zweiten Flusseinlass (13b) umfasst, der über eine Dampfleitung (14) zur Versorgung von Dampf in die Erhitzervorrichtung (13) mit einem Dampfgenerator (15) verbunden ist, wobei die Dampfversorgung aktiviert ist, wenn heiße Milch ausgegeben wird, und deaktiviert ist, wenn kalte Milch ausgegeben wird.

5. Einrichtung nach einem der Ansprüche 1 bis 3, wobei die Durchflusserhitzervorrichtung (13) ferner einen zweiten Flusseinlass (13b) umfasst, der über eine Dampfleitung (14) zur Versorgung von Dampf in die Erhitzervorrichtung (13) mit einem Dampfgenerator (15) verbunden ist, wobei ein Ein/Aus-Dampfventil (21) in der Dampfleitung angeordnet ist und eine geschlossene Position und eine geöffnete Position zum Deaktivieren bzw. Aktivieren einer Dampfversorgung in die Erhitzervorrichtung (13) aufweist.

6. Einrichtung nach einem der vorstehenden Ansprüche, wobei die Pumpe (11) eine Pumpe mit variierbarer Geschwindigkeit ist, wobei der Motor (12) der Pumpe von einem Treiber gesteuert wird, der elektronisch mit einer elektronischen Steuereinheit (20) verbunden ist, die konfiguriert ist, den Fluss von der Pumpe durch Anpassen der Drehzahl der Pumpe zu regulieren.

7. Einrichtung nach Anspruch 6, wenn in Abhängigkeit von Anspruch 5, wobei das Ein/Aus-Dampfventil (21) ein Magnetventil ist, das elektronisch von der Steuereinheit (20) gesteuert wird, und wobei die elektronische Steuereinheit konfiguriert ist, einen Vorgang der Ausgabe von heißer, geschäumter Milch durch Aktivieren der Dampfzufuhr in die Erhitzervorrichtung (13) einzuleiten und eine Temperatur der ausgegebenen Milch durch Einstellen der Drehzahl der Pumpe (11) auszuwählen.

8. Einrichtung nach Anspruch 6, wenn in Abhängigkeit von Anspruch 5, wobei das Ein/Aus-Dampfventil (21) ein Magnetventil ist, das elektronisch von der Steuereinheit (20) gesteuert wird, und wobei die elektronische Steuereinheit konfiguriert ist, einen Vorgang der Ausgabe von kalter, geschäumter Milch durch Deaktivieren der Dampfzufuhr in die Erhitzervorrichtung (13) einzuleiten und eine Drehzahl der Pumpe (11) auszuwählen.

## Revendications

1. Appareil pour distribuer du lait froid et chaud mousseux ou non mousseux, qui comprend :
- une conduite d'aspiration de lait (5) raccordée de manière hydraulique à un récipient à lait (3) et à une conduite d'air (9) pour permettre à de l'air d'entrer dans la conduite d'aspiration (5) ;
- une pompe (11) ayant un côté entrée et un côté distribution, la pompe étant entraînée par un moteur (12), le côté entrée étant raccordé de manière hydraulique à une conduite d'aspiration (8) pour aspirer du lait et de l'air ;
- une conduite de sortie (8) qui mène à une sortie de distribution (17) et qui comprend une première section de conduite longitudinale (16) et une seconde section de conduite longitudinale (18) située en aval de la première section longitudinale (16) en direction de la sortie de distribution (17), dans laquelle la première section de conduite longitudinale a une première extrémité raccordée au côté distribution de la pompe (11) et une seconde extrémité opposée à la première extrémité, et la seconde section de conduite longitudinale a une première extrémité et une seconde extrémité opposée correspondant à la sortie de distribution (17) ;
- un dispositif de chauffage à écoulement traversant (13) ayant une première entrée d'écoulement (13a) à travers laquelle s'écoule le fluide poussé par la pompe, et une sortie d'écoulement (13c), dans lequel la première entrée d'écoulement (13a) est raccordée à la seconde extrémité de la première section de conduite longitudinale (16) et la sortie d'écoulement est raccordée à la première extrémité de la seconde section de conduite longitudinale (18),
**caractérisé en ce que** la première section de conduite longitudinale (16) a une section transversale d'écoulement ayant un premier diamètre compris entre 0,70 mm et 1,00 mm et une première longueur comprise entre 50 mm et 500 mm et la seconde section de conduite longitudinale (18) a une section transversale d'écoulement ayant un second diamètre qui est supérieur au premier diamètre, le second diamètre étant compris entre 2 mm et 3 mm.

2. Appareil selon la revendication 1, dans lequel le premier diamètre est compris entre 0,75 mm et 0,95 mm et la première longueur est comprise entre 100 mm et 400 mm.

3. Appareil selon l'une quelconque des revendications précédentes, dans lequel la seconde section de conduite longitudinale (18) a une seconde longueur comprise entre 200 mm et 600 mm.

4. Appareil selon l'une quelconque des revendications précédentes, dans lequel le dispositif de chauffage à écoulement traversant (13) comprend en outre une seconde entrée d'écoulement (13b) raccordée à un générateur de vapeur (15) par l'intermédiaire d'une conduite de vapeur (14) pour alimenter de la vapeur dans le dispositif de chauffage (13), dans lequel l'alimentation en vapeur est activée lors d'une distribution de lait chaud et désactivée lors d'une distribution de lait froid.

5. Appareil selon l'une quelconque des revendications 1 à 3, dans lequel le dispositif de chauffage à écoulement traversant (13) comprend en outre une seconde entrée d'écoulement (13b) raccordée à un générateur de vapeur (15) par l'intermédiaire d'une conduite de vapeur (14) pour alimenter de la vapeur dans le dispositif de chauffage (13), dans lequel une soupape d'ouverture/fermeture de vapeur (21) est agencée dans la conduite de vapeur, et a une position fermée et une position ouverte pour désactiver et activer l'alimentation en vapeur dans le dispositif de chauffage (13) respectivement.

6. Appareil selon l'une quelconque des revendications précédentes, dans lequel la pompe (11) est une pompe à vitesse variable, le moteur (12) de la pompe étant commandé par un pilote raccordé électroniquement à une unité de commande électronique (20), qui est configurée pour réguler le débit de la pompe en réglant la vitesse de rotation de la pompe.

7. Appareil selon la revendication 6, lorsque prise en dépendance de la revendication 5, dans lequel la soupape d'ouverture/fermeture de vapeur (21) est une électrovanne, qui est commandée électroniquement par l'unité de commande (20), et l'unité de commande électronique est configurée pour mettre en place une opération de distribution de lait mousseux chaud en activant la distribution de vapeur dans le dispositif de chauffage (13) et pour sélectionner une température du lait distribué en réglant la vitesse de rotation de la pompe (11).

8. Appareil selon la revendication 6, lorsque prise en dépendance de la revendication 5, dans lequel la soupape d'ouverture/fermeture de vapeur (21) est une électrovanne, qui est commandée électroniquement par l'unité de commande (20), et l'unité de commande électronique est configurée pour mettre en place une opération de distribution de lait mousseux froid en désactivant la distribution de vapeur dans le dispositif de chauffage (13) et pour sélectionner une vitesse de rotation de la pompe (11).
